# EUROPÄISCHE PATENTSCHRIFT

(11) **EP 1 442 656 B1**
(45) Veröffentlichungstag und Bekanntmachung des Hinweises auf die Patenterteilung: **21.12.2005**
(21) Anmeldenummer: 04000802.1
(22) Anmeldetag: 16.01.2004
(51) Int. Cl.: A01G 13/02

(54) **Hagelschutzvorrichtung**
Protection device against hail
Dispositif de protection contre la grêle

(30) Priorität: 29.01.2003 IT bz20030004
(43) Veröffentlichungstag der Anmeldung: 04.08.2004
(73) Patentinhaber: Anselmi, Ferdinando, 38021 Brez (TN) (IT); Pilati, Gianfranco, 38023 Cles (TN) (IT)
(72) Erfinder: Anselmi, Ferdinando, 38021 Brez (TN) (IT); Pilati, Gianfranco, 38023 Cles (TN) (IT)
(74) Vertreter: Oberosler, Ludwig

(56) Entgegenhaltungen:
- FR-A- 2 777 737
- FR-A- 2 827 473
- US-A- 5 519 965

## Beschreibung

Die Erfindung bezieht sich auf eine Hagelschutzvorrichtung von der Art mit "flachen" Netzen welche wesentlich horizontal verlaufen, insbesondere für den Schutz von Baumkulturen zur Erzeugung von Obst wobei die Bäume in zueinander parallelen eher engen, mit einer Stützstruktur versehenen, Reihen angepflanzt sind.

Die bekannten Hagelschutzvorrichtungen mit flachen Netzen (siehe z. B. Dokument FR-A-2 827 473) weisen eine Verspannung mit horizontal verlaufenden Netzen auf welche etwas länger als die Baumreihen sind, wobei die Netze wegen dem Eigengewicht eine leicht zum Boden geneigte Lage einnehmen und an der Netzlängskante mittels Plaketten an Spanndrähten welche über die oberen Enden der Stützpfähle verlaufen befestigt sind und welche höher angeordnet sind als die Netzlängskanten welche entsprechend der Baumreihen-Mittellinie verlaufen. Besagte tiefer verlaufende Netzlängskanten können sich unter dem Gewicht der Hagelkörner weiter nach unten senken und den Hagel in einem Bereich zwischen den Baumreihen entleeren. Die Hagelnetze sind vorwiegend in Längsrichtung gespannt und die Längskanten der anliegenden Netze sind im Bereich der Mittellinie zwischen den Baumreihen in regelmäßigen Abständen untereinander verbunden oder durch quer wirkende Gummizüge gespannt. Bei Belastung durch Hagel bilden sich zwischen den Befestigungspunkten, bzw. zwischen den Querverspannungen, Einbuchtungen mit Öffnungen durch welche die Hagelkörner abrieseln können. Die bekannten Hagelschutzsysteme weisen folgende Nachteile auf:
- begrenztes Abfrieseln der Hagelkörner bei einer Neigung des Bodens quer zur Längserstreckung der Hagelnetze;
- das Abrieseln der Hagelkörner erfolgt erst nachdem sich eine beachtliche Menge von Hagelkörnern gesammelt hat wobei die Netze und die Stützstruktur sehr belastet wird;
- im Falle von Gummizügen müssen diese periodisch ausgetauscht werden, weiters ist bei stürmischem Hagelschlag, wegen der zu langen Zeiten der Absenkung der Netze, nicht ein zufriedenstellender Schutz gegeben.

Die Erfindung stellt sich die Aufgabe eine Hagelschutzvorrichtung zu schaffen bei welcher die Entladung der Hagelkörner wirkungsvoll bei jeglicher Neigung des Bodens erfolgt so dass keine zu starken Belastungen an den Netzen und an der Stützstruktur auftreten und dass die Pflanzen während keiner der Anpassungsfasen der Vorrichtung dem Hagelschlag ausgesetzt sind.

Diese Aufgabe wird erfindungsgemäß dadurch gelöst, dass die Netze, sobald sich auf diesen ein relativ bescheidenes Gewicht an Hagelkörnern angesammelt hat, selbsttätig und schnell mit den Netzlängskanten, welche der Mittellinie zwischen den Planzenreihen entsprechen, absenken um die Hagelkörner zum Boden zwischen den Pflanzenreihen zu entladen wobei die Pflanzen auch im Falle eines stürmischen Hagelschlages geschützt sind. Die Neigung der Netze zum Boden erfolgt erfindungsgemäß mittels eines Seilzugsystems und wird selbsttätig beim Erreichen einer vorbestimmten Belastung durch eine einstellbare Aushäng- oder Auslösvorrichtung verursacht. Die Aushäng- oder Auslösvorrichtung kann auch durch eine elektrisch gesteuerte Vorrichtung oder durch eine Elektrowinde ersetzt werden welche die Betätigungsseile freilässt, bzw. von der Winde abwickelt, um die Netze gegen den Boden abzusenken. Das selbe Seilzugsystem ermöglicht erfindungsgemäß die bequeme und schnelle Rückführung der Netze in die "flache" Stellung in welcher diese nicht die Durchfahrt der landwirtschaftichen Maschinen zwischen den Baumreihen für die Durchführung der in den verschiedenen Jahreszeiten anfallenden Arbeiten behindern. Im Falle einer Elektrowinde kann diese Rückführung der Netze in die "flache" Stellung selbsttätig, nach dem Hagelschlag, erfolgen.

Bei der erfindungsgemäßen Hagelschutzvorrichtung durchlaufen die Seile für die Bewegung der Netze Führungs- und Umlenkungselemente welche direkt an den Stützpfählen oder an den Abdeckkappen der oberen Pfahlenden befestigt sind. Ein einzelnes Modul der erfindungsgemäßen Hagelschutzanlage erstrekt sich über drei parallele Pflanzenreihen und besteht, außer aus den Stützpfählen und den Seilverspannungen welche gleicher Art sind wie jene der bekannten Anlagen mit flach angeordneten Netzen aber, in Bezug zu diesen, für geringere Belastungen ausgelegt sein können, aus:
- zwei Netzen deren Breite ca. der Hälfte des Abstandes zwischen den Pflanzenreihen entspricht und jedenfalls auf die Pflanzenart sowie auf den Abstand zwischen den Pflanzenreihen abgestimmt ist und deren eine Längskante jeweils am Verspannungsdraht welcher sich über die oberen Pfahlenden der links und rechts der mittleren Pflanzreihe liegenden Pflanzreihen erstreckt, befestigt ist,
- einer Reihe von Führungs- und Umlenkungselementen welche an den oberen Enden der Stützpfähle oder an den entsprechenden Abdeckkappen dieser Pfähle befestigt sind,
- zwei Längsbetätigungsseilen welche durch die mittleren Ösen an den Führungs- und Umlenkelementen geführt sind,
- mehreren Seilen für die Querverspannung welche mit einem Ende an den Längsbetätigungsseilen befestigt sind und mit dem anderen Ende an der zweiten Längskante der Netze befestigt oder eingehängt sind,
- einem Bodenverankerungselement im Bereich eines der Endpfähle der mittleren Pflanzenreihe;
- einem selbsttätigen Aushäng- oder Auslöseelement, bzw. aus einer von einer Sonde oder/und einer Zugkraftmesseinrichtung gesteuerten Elektrowinde.

Die Führungs- und Umlenkelemente weisen im Wesentlichen Ösen auf, durch welche die beiden Längsbetätigungsseile geführt sind und Ösen durch welche die Seile für die Querverspannung geführt sind. Die Ösen können auch von der offenen Art sein welche ein seitliches Einführen der Seile, ohne sie in Längsrichtung einfädeln zu müssen, ermöglichen. Besagte Elemente können an den bekannten Abdeckkappen welche meistens aus Kunststoff hergestellt sind oder direkt an den Pfählen befestigt werden.
An einem der Enden jeder Pflanzenreihe ist, im Bereich des Endpfahles, eine Bodenverankerung vorgesehen, das am Boden verankerte Seil ist am freien Ende mit einer Einhäng- oder Befestigungsvorrichtung für ein einziges Seil versehen welches mit den beiden Enden der zwei Längsbetätigungsseile und eventuell auch mit den Enden der zwei ersten Seile der Querverspannung verbunden ist. Die Einhängvorrichtung ist von der Art welche bei Erreichen einer bestimmten Zugbelastung durch die auf den Netzen abgelagerten Hagelkörner ein selbsttätiges Aushängen oder Auslösen bewirkt. Die Erfindung schließt nicht den Einsatz einer bekannten Vorrichtung aus welche, bei Erreichen einer bestimmten Zugbelastung, durch Abscheren eines ersetzbaren Elementes den freien Lauf der Seile und somit das schnelle Absenken der Netze zwecks Entladung der Hagelkörner auf den Boden zwischen den Pflanzreihen bewirkt, wobei die Pflanzen auch bei stürmischem Hagelschlag geschützt sind. Weiters schließt die Erfindung nicht die Befestigung der selbsttätigen Aushäng- oder Auslösvorrichtung an einem der Elemente der Stütz- oder Verspannungsstruktur ohne spezifische Verankerungen vorzusehen nicht aus.
Die Einstellung des Aushängens, bzw. des Freilassens, der Betätigungsseile für die Netze so dass die Netze sich bereits gegen den Boden absenken sobald die abgelagerten Hagelkörner ein noch bescheidenes Gewicht ausmachen, ermöglicht die Erstellung einer Stütz- und Verspannungsstruktur für eine effiziente und zuverlässige Hagelschutzanlage unter wirtschaftlicheren Erstellungsspesen.

Um die Netze infolge eines Hagelschlages wieder in horizontale Position zu bringen genügt es die Längsbetätigungsseile anzuziehen und dadurch die gesamte Anzahl der Seile für die Querverspannung anzuspannen und das gemeinsame Betätigungsseil an der selbsttätigen Aushäng- oder Auslösevorrichtung durch Anbringen eines unversehrten Schärelementes zu sichern welches beim nächsten Hagelschlag, bei Überschreitung der festgelegten Grenzbelastung durch die entsprechende Zugkraft abgeschärt wird. Die Wiederaufrichtung der Netze in horizontaler Position ist ein einfacher und schnell durchführbarer Arbeitsgang welcher nicht das Durchschreiten zwischen den einzelnen Pflanzenreihen erfordert. Erfindungsgemäß kann die Wiederaufrichtung der Netze auch durch eine Elektrowinde erfolgen welche eventuell durch einen Zeitschalter und oder durch eine Sonde gesteuert werden kann.
Die Erfindung schließt nicht den Einsatz von Zugfedern oder elastischen Elementen an den Betätigungsseilen und/oder an den einzelnen Querverspannungsseilen oder vor und/oder nach der selbsttätigen Aushängvorrichtung, aus.
Weiters ist das erfindungsgemäße System, pro Anlagenmodul, auch mit einem einzigen Betätigungsseil, an welchem die Querverspannungsseile für jeweils die beiden Netze links und rechts befestigt sind, funktionsfähig.
Vorteilhafterweise sind die Querverspannungsseile mit einer bekannten Vorrichtung welche eine Veränderung der Länge ermöglicht versehen, diese Vorrichtung kann auch teil des Hakens oder des Befestigungselementes sein welche an der Längskante des Netzes angebracht werden.
Um eine direkte Sonnenaussetzung der Früchte (in der Zeit unmittelbar vor der Ernte) zu ermöglichen können die Enden der Querverspannungsseile an den entsprechenden Längskanten der beiden Netze eingehängt werden welche am Längsverspannungsseil der selben Pflanzenreihe befestigt sind welche mit Betätigungsseilen und den entsprechenden Querverspannungsseilen ausgestattet ist. In diesem Fall findet ein Zusammenraffen des Netzes durch Anziehen einer Längskante statt bis diese mit der zweiten Längskante des selben Netzes zusammenfällt.
Erfindungsgemäß können die Führungs- und Umlenkungselemente für die Längsbetätigungsseile und/oder für die Querverspannungsseile auch seitlich an den Stützpfählen und eventuell unter oder über der Vespannungsstruktur der Anlage befestigt sein.
Natürlich wird an beiden äußersten Längsseiten einer Anlage, entsprechend den Pfählen der äußersten Pflanzenreihe, nur ein Längsbetätigungsseil vorgesehen sein das mit Querverspannungsseilen versehen ist welche ein Netz betätigen deren zweite Längskante am Längsverspannungsseil befestigt ist das an den oberen Enden der Pfähle der vorletzten Pflanzenreihe befestigt ist.
Die Erfindung erfasst weiters die Anwendung, des hier für eine Hagelschutzvorrichtung beschriebenen Betätigungssysems, für Wetterschutzvorrichtungen zum Schutz von nässeempfindlichen Kulturen (z.B. für Kirschkulturen) wo die Netze durch Gewebe- oder Folienbahnen ersetzt sind.

Die Erfindung wird anschließend anhand eines vorzuziehenden Ausführungsbeispieles einer erfindungsgemäßen Hagelschutzvorrichtung, welche in den beigelegten Zeichnungen schematisch dargestellt ist, näher erklärt; dabei erfüllen diese rein erklärenden, nicht begrenzenden, Zweck.

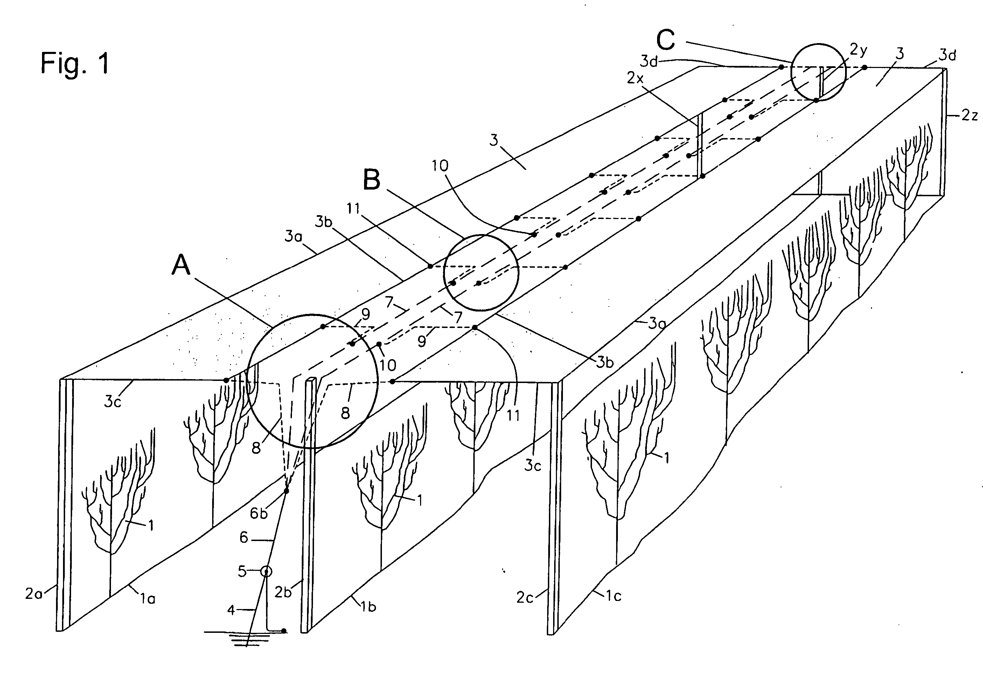

Die Fig. 1 zeigt in perspektivischer Darstellung schematisch ein Modul einer erfindungsgemäßen Hagelschutzvorrichtung mit den Netzen in "flacher" Stellung, mit zwei Betätigungsseilen (strichlierte Linien) welche zwei parallele Netze betätigen, die Stütz- und Verspannungsstruktur sowie die Pflanzenreihen sind darstellerisch auf ein Minimum reduziert um die Funktion der Einrichtung besser erkenntlich zu machen.

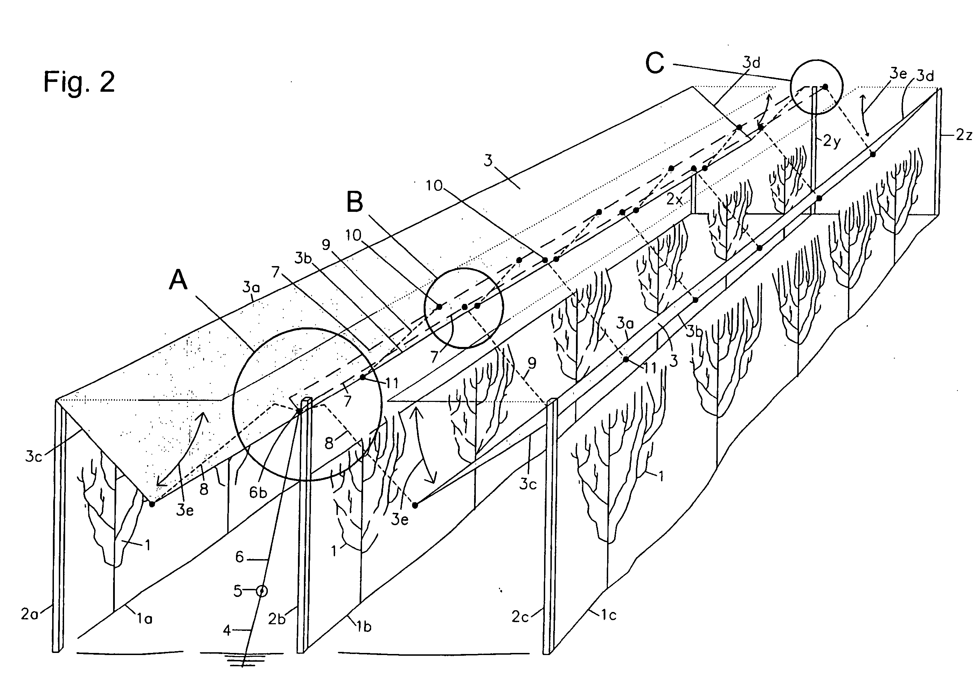

Die Fig. 2 zeigt die selbe in Fig. 1 dargestellte Hagelschutzvorrichtung mit, infolge eines Hagelschlages, abgesenkten Netzen.

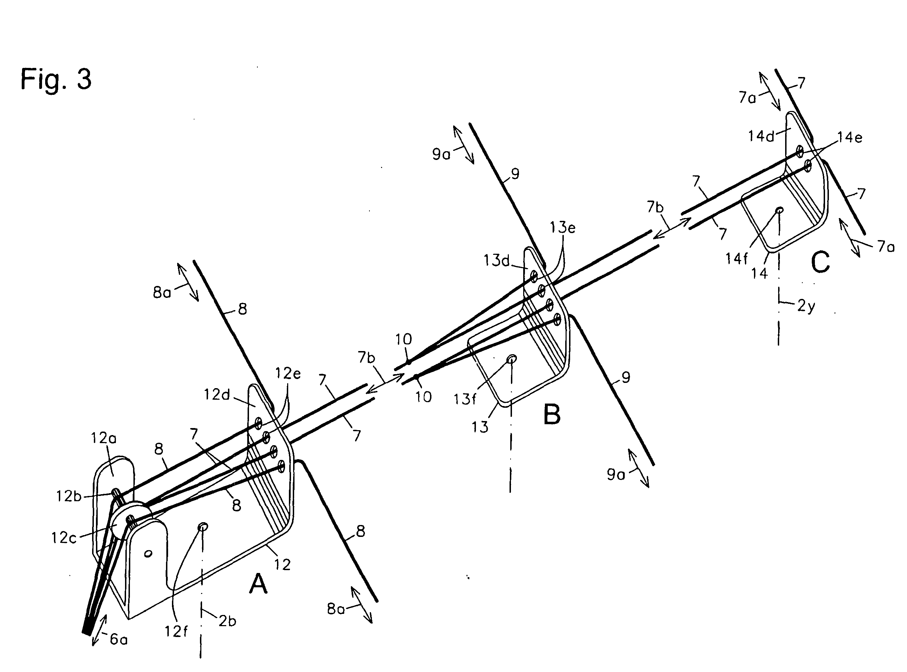

Die Fig. 3 zeigt die Führungs- und Umlenkungselemente für die Längsbetätigungsseile und die Querverspannungsseile an unterschiedlichen Stellen längs der entsprechenden Pflanzenreihe, wobei mit A die Position am oberen Ende des Endpfahles der Pflanzenreihe bezeichnet ist in dessen Nähe die Bodenverankerung und die selbsttätige Aushäng- und Auslöseinrichtung vorgesehen ist, mit B die Position an einem beliebigen Pfahl der Pflanzenreihe zwischen den beiden Endpfählen bezeichnet ist und mit C die Position am letzten Pfahl der selben Pflanzenreihe bezeichnet ist.

Ein einzelnes Modul der erfindungsgemäßen Hagelschutzeinrichtung umfasst die Betätigung zweier Hagelschutznetze 3 und erstreckt sich insgesamt auf drei Reihen 1a, 1b, 1c von Pflanzen 1; nur an den beiden Längsseiten einer Hagelschutzanlage umfassen die Module die Betätigung von jeweils nur einem Netz und erstrecken sich diese auf nur zwei Pflanzenreihen. Die erfindungsgemäße Einrichtung besteht aus einer Stützstruktur zum Beispiel aus armierten Betonpfählen 2a, 2b, 2c am Anfang der Pflanzenreihen und aus Betonpfählen 2x, 2y, 2z am entsprechenden Ende der selben Pflanzenreihen. Die Verspannungsstruktur besteht wesentlich aus Metalldrähten welche sich in Längs- und in Querrichtung über die Abdeckkappen der oberen Pfahlenden erstrecken sowie aus Verankerungen und Spannvorrichtungen welche von bekannter Art sein können jedoch so berechnet sind, dass sie einer wesentlich kleineren Belastung durch auf den Netzen abgelagerte Hagelkörner standhalten müssen als dies bei bekannten Netzen notwendig wäre.
Im Bereich des Endpfahles 2b der mittleren Pflanzenreihe 1b der insgesamt drei Pflanzreihen 1a, 1b, 1c welche das Modul bilden ist am Boden 4 eine Verankerung vorgesehen welche am oberen Ende mit einer selbsttätigen Aushäng- oder Auslösevorrichtung 5 versehen ist an welcher ein Seil 6 gehalten wird an dessen oberem Ende zwei Längsbetätigungsseile 7 und zwei Querverspannungsseile 8 befestigt 6b sind. Die vier Seile 7, 8 durchlaufen ein erstes Führungs- und Umlenkungselement 12 welches am oberen Endes (A) des Pfahles 2b oder an der entsprechenden Abdeckkappe über die Bohrung 12f befestigt ist. Das Element 12 weist zwei vertikale, zueinander parallele Lappen 12a auf um eine Welle 12b zu halten an welcher eine Seilrolle 12c drehbar gelagert ist. Natürlich können an der selben Welle 12b auch mehrere einzelne oder mehrfache Seilrollen für jedes der Seile 7, 8 gelagert sein. An der gegenüberliegenden Seite weist das Element 12 eine Platte 12d auf welche mit Ösen 12e für die Durchführung der Seile 7, 8 versehen ist von denen die Längsbetätigungsseile 7 geradlinig weitergeführt werden während die Querverspannungsseile 8 um ca. 90° umgeleitet werden um jeweils an der freien Netzlängskante 3b der beiden Netze 3 befestigt 11 zu werden welche mit der zweiten Längskante 3a am Verspannungdraht befestigt sind der über die Abdeckkappen der Pfähle der seitlichen Pflanzenreihen 1a, 1c gespannt ist. An sämtlichen folgenden (nicht dargestellten) Pfählen der selben Pflanzenreihe 1b sind die Führungs- und Umlenkelemente 13 befestigt (B) welche eine abgewinkelte Form aufweisen und an einem Teil eine Befestigungsbohrung 13f aufweisen während der zweite Teil 13d Ösen 13e aufweist durch welche die beiden Längsbetätigungsseile 7 welche sich geradlinig über die gesamte Pflanzenreihe 1b erstrecken und die beiden Querverspannungsseile 9 laufen welche um ca. 90° umgeleitet werden um an den entsprechenden Längskanten 3b der Netze 3 befestigt 11 zu werden. Die Querverspannungsseile 9 sind an den Längsbetätigungsseile 7 befestigt 10 und zwar in einem Abstand zu den Ösen 13e dass während des Absenkens 3e der Netze 3 gegen den Boden ein freier Lauf 9a gewährleistet ist bis die Längskante 3b eine dem Boden angenäherte Position einnehmen kann so dass die Hagelkörner frei auf die Erde geleitet werden und die Pflanzen 1 abgedeckt sind (Fig. 1).
Am oberen Ende des Endpfahles 2y der Pflanzreihe 1b kann das selbe Führungs-und Umlenkungselement 13 oder ein spezifisches Element 14 befestigt sein welches nur zwei Ösen 14e für die Betätigungsseile 7 aufweist welche in dieser Position (C) um ca. 90° umgelenkt werden um am Ende der jeweiligen Längskante 3b der Netze 3 befestigt zu werden.
Durch Betätigen 6a des Seiles 6 an welchem die Längsbetätigungsseile 7 sowie die Querverspannungsseile 8 befestigt 6b sind, erhält man das Längsverschieben 7f der Betätigungsseile 7 durch die Ösen 12e, 13e, 14e, das Verschieben 8a der Querverspannungsseile 8, das Verschieben 9a aller Querverspannungsseile 9 welche am Auslauf der Ösen 13e umgelenkt werden und das Verschieben 7a der Endabschnitte der Betätigungsseile 7 am Auslauf der Ösen 14e.
Die Bewegung 6a in Richtung zur selbsttätigen Aushäng- oder Auslösevorrichtung 5 bewirkt das Spannen der Netze 3 (Fig. 1) in "flacher" Position während die Bewegung 6a in Richtung zum am Endpfahl 2b befestigten Führungs- und Umlenkungselement 12 bewirkt das Absenken 3e der Netze 3(Fig. 2).
Die selbsttätige Aushäng- oder Auslösvorrichtung 5 ist vorteilhafterweise einstellbar und bewirkt das Aushängen oder die Freigabe des Seiles 6 von der Verankerung 4 infolge einer bestimmten Zugbelastung welche durch eine relativ geringe Last von, in den flachen Netzen 3 aufgefangenen Hagelkörnern bestimmt ist. Die durch das besagte Aushängen oder durch die Freigabe verursachte Absenkung 3e der Netze 3 bewirkt das Entladen der Hagelkörner in einem Mittelbereich zwischen den Pflanzenreihen und die gegen den Boden geneigte Stellung der Netze 3 (Fig. 2) leiten den Hagel frei zum Boden ab und zwar unabhängig von dessen Neigung und schützen gleichzeitig die Pflanzen 1, auch bei stürmischem Hagelschlag mit sehr flachen Einfallwinkeln.

Die Erfindung schließt nicht den Einsatz eines einzigen Betätigungsseiles 7 mit den jeweiligen Befestigungen 10 der Querverspannungsseile 9 am selben Seil 7 für beide Netze 3 eines jeden Moduls, aus. Weiters können die Führungs- und Umlenkungselemente 12, 13, 14 unterschiedliche Formen haben. Erfindungsgemäß können die Ösen auch von offener Art sein, z.B.. aus schraubenlinienförmig gebogenen Rundeisen gefertigt sein welche das seitliche Einführen des Seiles, ohne Einfädeln des selben, ermöglichen. Die Befestigungs- und/oder Einhängelemente 6b, 10, 11 können mit bekannten Spannvorrichtungen ausgestattet sein um damit die Länge der befestigten Seile anpassen zu können.

## Patentansprüche

1. Hagelschutzanlage von der Art mit flachen, wesentlich horizontal, verspannten Netzen (3) welche mit je einer ihrer Längskanten (3a) am Längsverspannungsdraht welcher über die oberen Enden der Pfähle oder deren Abdeckkappen der Pflanzreihen (2a, 2c) gespannt ist, befestigt sind während längs der jeweils zweiten Längskante (3b) der Netze (3), unter sich beabstandet, Verbindungselemente oder elastische Verbindungselemente an den Längskanten (3b) der paarweise angeordneten Netze (3) vorgesehen sind welche eine Verspannung der Netze in Querrichtung bewirken, **dadurch gekennzeichnet, dass** die Querverspannung der Netze (3) mittels mindestens einem Betätigungsseil (7) erfolgt welches in Längsrichtung verstellbar (7b) mittels Führungs- und Umlenkelemente (12, 13, 14) gelagert (A, B, C) ist, an welchem Seil mehrere Querverspannungsseile (8, 9) befestigt (10) sind welche durch Ösen (12e, 13e, 14e) an den Führungs- und Umlenkungselementen (12, 13, 14) laufen um ca. um 90° zum Betätigungsseil (7) umgelenkt zu werden, deren Enden an den jeweiligen Längskante (3b) der Netze (3) einhängbar oder befestigbar sind um durch die Längsbewegung des Betätigungsseiles (7) das Spannen in Querrichtung der Netze (3) in einer flachen Position, beziehungsweise das Absenken (3e) der Netze (3) gegen den Boden geneigt, zu bewirken.

2. Hagelschutzanlage gemäß Anspruch 1, **dadurch gekennzeichnet, dass** zwei Betätigungsseile (7) vorgesehen sind wobei die Querverspannungsseile (9) für eines der Netze (3) eines selben Moduls der Anlage an einem der Seile (7) befestigt ist während die Querverspannungsseile (9) für das zweite Netz (3) am zweiten Seil (7) befestigt sind welches parallel zum ersten und an den selben Führungs- und Umlenkelementen geführt ist.

3. Hagelschutzanlage gemäß dem Anspruch 1 oder 2, **dadurch gekennzeichnet, dass** die Querverspannung der Netze durch die Festlegung des oder der Betätigungsseile (7) an einer spezifischen Verankerung (4) oder an einem Element der Stützvorrichtung oder an einem Element der Verspannung der Anlage welches am Boden vorzugsweise am Ende der entsprechenden Pflanzenreihe (1b) verankert ist, erfolgt.

4. Hagelschutzanlage gemäß Anspruch 3, **dadurch gekennzeichnet, dass** zwischen der Verankerung (4) und dem Betätigungsseil (7), oder den Betätigungsseilen (7), eine selbsttätige Aushäng- oder Auslösevorrichtung vorgesehen ist welche durch das Erreichen einer bestimmten auf das Seil (7) oder auf die Seile (7) wirkende Zugbelastung welche durch die Last der Hagelkörner welche auf den in flacher Position gehaltenen Netzen (3) liegen, ausgelöst wird.

5. Hagelschutzanlage gemäß Anspruch 4, **dadurch gekennzeichnet, dass** die selbsttätige Aushäng- oder Auslösevorrichtung einstellbar ist.

6. Hagelschutzanlage gemäß Anspruch 2, **dadurch gekennzeichnet, dass** die Betätigungsseile (7) und/oder die Querverspannungsseile (8, 9) mit elastischen Zugelementen ausgestattet sind.

7. Hagelschutzanlage gemäß den Ansprüchen 1 und 2, **dadurch gekennzeichnet, dass** die Befestigungselemente (6b, 10) selbst und/oder die Einhäng- oder Befestigungselemente (11) der Querverspannungsseile (8, 9) mit Spannern ausgestattet sind.

8. Hagelschutzanlage gemäß den Ansprüchen 1 und 2, **dadurch gekennzeichnet, dass** die Seile (6, 7, 8, 9) mit Spannern ausgestattet sind welche die Einstellung der Länge der befestigten Seile ermöglichen.

9. Hagelschutzanlage gemäß den Ansprüchen 1 und 2, **dadurch gekennzeichnet, dass** die Führungs- und Umlenkungselemente (12, 13, 14) an den Abdeckkappen der Pfähle (2a, 2b, 2c, 2x, 2y, 2z) oder direkt am oberen Ende dieser oder seitlich an diesen Pfählen, oberhalb oder unterhalb der Verspannungsstruktur, angebracht sind und dass die Seile (7, 8, 9) welche durch diese Elemente geführt werden durch einfache geschlossene Ösen (12e, 13e, 14e) laufen oder durch offene Ösen laufen welche das seitliche Einführen des Seiles ohne Einfädeln des selben ermöglichen.

10. Hagelschutzanlage gemäß den Ansprüchen 1 und 2, **dadurch gekennzeichnet, dass** die Bewegungen (6a) welche das Absenken, bzw. das Anheben (3e) der Netze (3) bewirken durch eine Elektroseilwinde erfolgen können wobei das Abwickeln durch eine Sonde oder ein Messinstrument welches den Hagelschlag wahrnimmt oder durch einen Zugkraftmesskopf gesteuert wird während das Aufwickeln durch das selbe Messinstrument und/oder durch einen Zeitschalter gesteuert wird.

## Claims

1. Hail protection system of the type comprising flat, substantially horizontal, braced nets (3) which have one of their respective longitudinal edges (3a) fastened to the longitudinal guy wire which is strung over the upper ends of the posts, or their capping pieces, of the plant rows (2a, 2c), whereas, along the respective second longitudinal edge (3b) of the nets (3), connecting elements or elastic connecting elements are provided at a distance from one another on the longitudinal edges (3b) of the paired arrangement of nets (3) and cause the nets to be braced in the transverse direction, **characterized in that** the nets (3) are braced transversely by means of at least one actuating cable (7) which is mounted (A, B, C) displaceably (7b) in the longitudinal direction by means of guide and deflection elements (12, 13, 14), to which cable are fastened (10) a plurality of transverse guy cables(8, 9) which run through eyes (12e, 13e, 14e) on the guide and deflection elements (12, 13, 14) so as to be deflected through about 90° with respect to the actuating cable (7), the ends of which transverse guy cables can be hooked or fastened to the respective longitudinal edge (3b) of the nets (3) in order, as a result of the longitudinal movement of the actuating cable (7), to cause the nets (3) to be tensioned in the transverse direction in a flat position or to cause the nets (3) to be lowered (3e) at an inclination with respect to the ground.

2. Hail protection system according to Claim 1, **characterized in that** two actuating cables (7) are provided, with the transverse guy cables (9) for one of the nets (3) of one and the same module of the system being fastened to one of the cables (7) while the transverse guy cables (9) for the second net (3) are fastened to the second cable (7), which is guided parallel to the first cable and on the same guide and deflection elements.

3. Hail protection system according to Claim 1 or 2, **characterized in that** the nets are braced transversely by securing the actuating cable or cables (7) to a specific anchorage (4) or to an element of the supporting apparatus or to an element of the bracing means of the system, which element is anchored to the ground, preferably at the end of the corresponding plant row (1b).

4. Hail protection system according to Claim 3, **characterized in that** an automatic unhooking or release device is provided between the anchorage (4) and the actuating cable (7), or the actuating cables (7), and is triggered as a result of reaching a specific tensile loading acting on the cable (7) or on the cables (7), this tensile loading being determined by the load of the hailstones which lie on the nets (3) held in the flat position.

5. Hail protection system according to Claim 4, **characterized in that** the automatic unhooking or release device is adjustable.

6. Hail protection system according to Claim 2, **characterized in that** the actuating cables (7) and/or the transverse guy cables (8, 9) are equipped with elastic tension elements.

7. Hail protection system according to Claims 1 and 2, **characterized in that** the fastening elements (6b, 10) themselves and/or the hooking or fastening elements (11) of the transverse guy cables (8, 9) are equipped with tensioners.

8. Hail protection system according to Claims 1 and 2, **characterized in that** the cables (6, 7, 8, 9) are equipped with tensioners which make it possible to adjust the length of the fastened cables.

9. Hail protection system according to Claims 1 and 2, **characterized in that** the guide and deflection elements (12, 13, 14) are mounted on the capping pieces of the posts (2a, 2b, 2c, 2x, 2y, 2z) or directly on the upper end or on the side of these posts, above or below the bracing structure, and **in that** the cables (7, 8, 9) which are guided through these elements run through simple closed eyes (12e, 13e, 14e) or run through open eyes which make it possible to introduce the cable laterally without threading it in.

10. Hail protection system according to Claims 1 and 2, **characterized in that** the movements (6a) which cause the nets (3) to be lowered or raised (3e) can be produced by an electrically operated cable winch, the unwinding operation being controlled by a probe or a measuring instrument which detects the hail strike or by a tensile force measuring head, while the winding operation is controlled by the same measuring instrument and/or by a time switch.

## Revendications

1. Dispositif de protection contre la grêle, du type à filets (3) plats, tendus, sensiblement horizontaux, fixés respectivement, par l'un de leurs bords longitudinaux (3a), sur un fil de tension longitudinal tendu sur les extrémités supérieures des poteaux, ou leur capuchon de recouvrement, des rangées de plantation (2a,2c), tandis que, le long chaque fois du deuxième bord longitudinal (3b) des filets (3), sont prévus des éléments de liaison ou des éléments de liaison élastique, espacés entre eux, sur les bords longitudinaux (3b) des filets (3) disposés par paires, qui provoquent une mise sous tension mécanique des filets en direction transversale, **caractérisé en ce que** la mise sous tension mécanique transversale des filets (3) est effectuée à l'aide d'au moins un câble d'actionnement (7) monté (A,B,C) de façon réglable (7b) en direction longitudinale à l'aide d'éléments de guidage et de renvoi (12,13,14), câble(s) sur lequel (lesquels) sont fixés (10) une pluralité de câbles de tension transversale (8,9), passant par des oeillets (12e,13e,14e) montés sur les éléments de guidage et de renvoi (12,13,14) et déviés d'environ 90° par rapport au câble d'actionnement (7), dont les extrémités sont susceptibles d'être accrochées ou d'être fixées sur le bord longitudinal (3b) respectif des filets (3), pour, du fait du déplacement longitudinal du câble d'actionnement (7), provoquer la mise sous tension mécanique en direction transversale des filets (3) en une position plate, respectivement l'abaissement (3e) des filets (3) inclinés, vers le sol.

2. Dispositif de protection contre la grêle selon la revendication 1, **caractérisé en ce que** sont prévus deux câbles d'actionnement (7), les câbles de tension mécanique transversale (9) pour l'un des filets (3) d'un même module du dispositif étant fixés sur l'un des câbles (7), tandis que les câbles de tension transversale (9) pour le deuxième filet (3) dont fixés sur le deuxième câble (7) et sont guidés parallèlement au premier et aux mêmes éléments de guidage et de renvoi.

3. Dispositif de protection contre la grêle selon la revendication 1 ou 2, **caractérisé en ce** la mise sous tension mécanique transversale des filets se fait grâce à la fixation du ou des câbles d'actionnement (7) sur un ancrage (4) spécifique, ou sur un élément du dispositif d'appui, ou sur un élément de la mise sous tension mécanique du dispositif, ancré au sol, de préférence, à l'extrémité de la rangée de plantation (1b) correspondante.

4. Dispositif de protection contre la grêle selon la revendication 3, **caractérisé en ce que**, entre l'ancrage (4) et le câble d'actionnement (7), ou les câbles d'actionnement (7), est prévu un dispositif de décrochage ou de déclenchement automatique, qui est déclenché par l'atteinte d'une sollicitation en traction déterminée, agissant sur le câble (7) ou sur les câbles (7), sous l'effet de la charge exercée par les grains de grêle se trouvant sur les filets (3) maintenus en position plate.

5. Dispositif de protection contre la grêle selon la revendication 4, **caractérisé en ce que** le dispositif de décrochage ou de déclenchement automatique est réglable.

6. Dispositif de protection contre la grêle selon la revendication 2, **caractérisé en ce que** les câbles d'actionnement (7) et/ou les câbles de tension transversale (8, 9) sont munis d'éléments de traction élastiques.

7. Dispositif de protection contre la grêle selon les revendications 1 et 2, **caractérisé en ce que** les éléments de fixation (6b, 10) eux-mêmes et/ou les éléments d'accrochage ou de fixation (11) des câbles de traction transversale (8, 9) sont munis de tendeurs.

8. Dispositif de protection contre la grêle selon les revendications 1 et 2, **caractérisé en ce que** les câbles (6, 7, 8, 9) sont munis de tendeurs, permettant le réglage de la longueur des câbles fixés.

9. Dispositif de protection contre la grêle selon les revendications 1 et 2, **caractérisé en ce que** les éléments de guidage et de renvoi (12,13,14) sont montés sur les capuchons de recouvrement des piquets (2a, 2b, 2c, 2x, 2y, 2z), ou bien directement sur l'extrémité supérieure de ceux-ci ou littéralement sur ces piquets, au-dessus ou au-dessous de la structure tendeuse, et **en ce que** les câbles (7, 8, 9), qui sont guidés par ces éléments, passent par des oeillets (12e, 13e, 14e) fermés simples, ou bien passent par des oeillets ouverts, permettant l'insertion latérale du câble, sans avoir à enfiler celui-ci.

10. Dispositif de protection contre la grêle selon les revendications 1 et 2, **caractérisé en ce que** les déplacements (6a), provoquant l'abaissement ou le soulèvement (3e) des filets (3), peuvent se faire au moyen d'un treuil à câble électrique, le déroulement étant commandé par une sonde ou un instrument de mesure, qui perçoit le choc de la grêle, ou bien par une tête de mesure de force de traction, tandis que l'enroulement est commandé par le même instrument de mesure et/ou par un interrupteur temporisé.
